(19) Europäisches Patentamt / European Patent Office / Office européen des brevets

(11) **EP 3 950 723 B1**

(12) **EUROPEAN PATENT SPECIFICATION**

(45) Date of publication and mention
of the grant of the patent:
**10.05.2023  Bulletin 2023/19**

(21) Application number: **21189031.4**

(22) Date of filing: **02.08.2021**

(51) International Patent Classification (IPC):
***C08C 19/02*** *(2006.01)*      ***C08L 9/06*** *(2006.01)*

(52) Cooperative Patent Classification (CPC):
(C-Sets available)
**C08C 19/02; C08L 9/06**                    (Cont.)

(54) **RUBBER COMPOSITION, AND TIRE**

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2020  JP 2020131541**

(43) Date of publication of application:
**09.02.2022  Bulletin 2022/06**

(73) Proprietor: **Asahi Kasei Kabushiki Kaisha
Tokyo 1000006 (JP)**

(72) Inventor: **SUMITANI, Shogo
Tokyo, 100-0006 (JP)**

(74) Representative: **Strehl Schübel-Hopf & Partner
Maximilianstrasse 54
80538 München (DE)**

(56) References cited:
**EP-A1- 0 775 725        EP-A1- 2 824 116
EP-A1- 3 521 341        CN-B- 104 945 559
JP-A- 2017 214 493      US-A- 3 935 176**

(52) Cooperative Patent Classification (CPC): (Cont.)

C-Sets
**C08L 9/06, C08L 7/00**

**Description**

BACKGROUND OF THE INVENTION

Field of the Invention

The present invention relates to a rubber composition, and a tire.

Description of the Related Art

In recent years, a winter tire is required to be improved in driving performance on a snow-covered road (on-snow performance). In addition, due to social demand for reduction of global environmental load, there are increasing demands for extension of the service life of tires, and improvement of abrasion resistance of a tire is strongly required.
For purposes of reducing an elastic modulus at a low temperature and assuring high followability of a tread rubber on a snow-covered road surface for improving the snow performance of a tire, methods by reduction of the amount of a filler to be added, by increase of the amount of an oil to be added, by addition of a natural rubber, and the like have been conventionally proposed. Such methods have, however, a problem that the abrasion resistance tends to be lowered.
In recent years, in the fields of rubbers for tire treads, sheets, films and asphalt modification, a rubber composition containing a rubber-like polymer having an ethylene structure and containing a crosslinkable unsaturated group introduced therein has been proposed for purposes of increasing mechanical strength and permanent compression set. It has been also proposed that abrasion resistance of a tire is also improved by causing such a rubber-like polymer to be contained (see, for example, International Publication Nos. WO2003/085010, WO2019/151126, WO2019/151127, and WO2019/078083).
A rubber-like polymer having an ethylene structure and containing a crosslinkable unsaturated group tends to be, however, poor in compatibility with the natural rubber, and hence a phase separation structure is formed in a rubber composition. Therefore, when a load is applied to a tire obtained therefrom, there is a tendency that stress is concentrated on the interface to deteriorate crack resistance.
The present invention is an invention achieved in consideration of the above-described problems, and an object is to provide a rubber composition from which a tire excellent in on-snow performance and abrasion resistance, and also excellent in crack resistance can be obtained.

SUMMARY OF THE INVENTION

The present inventors made earnest studies to solve the above-described problems of the conventional techniques, resulting in finding that balance between on-snow performance and abrasion resistance is improved and more excellent crack resistance is obtained by specifying an iodine value of a rubber-like polymer, and contents of the rubber-like polymer, a natural rubber, and a silica-based inorganic filler used as a reinforcing material, and thus, the present invention was accomplished.
Specifically, the present invention provides the following:

[1] A rubber composition, containing: 10 parts by mass or more and 90 parts by mass or less of a rubber-like polymer having an iodine value of 10 to 200, a content of an ethylene structure of 3% by mass or more, a content of an aromatic vinyl monomer block of less than 10% by mass, and a content of a conjugated diene monomer unit of 2% by mass or more; 10 parts by mass or more and 90 parts by mass or less of a natural rubber, wherein a total amount of a rubber component including the rubber-like polymer and the natural rubber is 100 parts by mass; and 60 parts by mass or more and 120 parts by mass or less of a silica-based inorganic filler.
[2] The rubber composition according to [1], in which the rubber-like polymer has a solubility parameter (SP value) of 16.8 $(MPa)^{1/2}$ or more and 17.4 $(MPa)^{1/2}$ or less.
[3] The rubber composition according to [1] or [2], in which the rubber-like polymer has a glass transition temperature (Tg) of -35°C or less.
[4] The rubber composition according to any one of [1] to [3], in which the rubber-like polymer is a conjugated diene-based polymer, containing 5% by mass or more and 40% by mass or less of an aromatic vinyl monomer unit, and a 1,2-vinyl bond content in the conjugated diene monomer unit is 10 mol% or more and 60 mol% or less.
[5] The rubber composition according to any one of [1] to [4], in which the rubber-like polymer contains a nitrogen atom.
[6] The rubber composition according to [5], in which the rubber-like polymer has a modification ratio of 40% by mass or more.
[7] The rubber composition according to any one of [1] to [6], containing a resin.
[8] A tire, containing the rubber composition according to any one of [1] to [7].

The present invention can provide a rubber composition from which a tire excellent in balance between on-snow performance and abrasion resistance, and also excellent in crack resistance can be obtained.

DETAILED DESCRIPTION OF THE PREFERRED EMBODIMENTS

Now, an embodiment for practicing the present invention (hereinafter referred to as the "present embodiment") will be described in detail. It is noted that the following embodiment is merely illustrative for describing the present invention, and that the present invention is not limited to the following embodiment. The present invention can be practiced with modifications appropriately made within the scope thereof.

[Rubber Composition]

A rubber composition of the present embodiment contains: 10 parts by mass or more and 90 parts by mass or less of a rubber-like polymer having an iodine value of 10 to 200, a content of an ethylene structure of 3% by mass or more, a content of an aromatic vinyl monomer block of less than 10% by mass, and a content of a conjugated diene monomer unit of 2% by mass or more; 10 parts by mass or more and 90 parts by mass or less of a natural rubber, wherein a total amount of a rubber component including the rubber-like polymer and the natural rubber is 100 parts by mass; and 60 parts by mass or more and 120 parts by mass or less of silica used as a reinforcing material.

The rubber-like polymer of the present embodiment is suitably used in the form of a vulcanizate. The vulcanizate can be obtained by, for example, mixing the rubber-like polymer of the present embodiment with an inorganic filler such as silica or carbon black, a rubber component different from the rubber-like polymer of the present embodiment, a silane coupling agent, a rubber softer, a wax, a vulcanizing agent, a vulcanization accelerator, and a vulcanization aid to obtain a rubber composition, and vulcanizing the rubber composition by heating. The respective components will now be described in detail.

[Rubber-like Polymer]

The rubber-like polymer of the present embodiment is obtained preferably by copolymerizing at least a conjugated diene monomer and hydrogenating a part of the resultant conjugated diene monomer unit, or by copolymerizing at least ethylene and a conjugated diene monomer. Thus, a rubber-like polymer containing an ethylene structure and a conjugated diene monomer unit can be obtained.

The rubber-like polymer may contain an aromatic vinyl monomer unit if necessary. In this case, the rubber-like polymer can be obtained by copolymerizing at least a conjugated diene monomer and an aromatic vinyl monomer, and hydrogenating a part of the resultant conjugated diene monomer unit, or by copolymerizing at least ethylene, a conjugated diene monomer, and an aromatic vinyl monomer. The rubber-like polymer may further contain another monomer unit.

In the present embodiment, the term "monomer" refers to a compound before polymerization, and the term "monomer unit" refers to a constitutional unit of a polymer. The term "ethylene structure" embraces both a structure generated by hydrogenating a part of a double bond portion of a conjugated diene monomer unit, and an ethylene monomer unit obtained when ethylene is used as a monomer.

As a method for performing hydrogenation after polymerizing a conjugated diene monomer, as described in International Publication No. WO96/05250, Japanese Patent Laid-Open No. 2000-053706, and International Publication Nos. WO2003/085010, WO2019/151126, WO2019/151127, WO2002/002663, and WO2015/006179, a method in which hydrogenation is performed after a conjugated diene monomer is polymerized by anionic polymerization, or copolymerized with an additional monomer if necessary, with various additives under various conditions is preferably employed.

The conjugated diene monomer is not especially limited, and examples include 1,3-butadiene, isoprene, 2,3-dimethyl-1,3-butadiene, 1,3-pentadiene, 3-methyl-1,3-pentadine, 1,3-hexadiene, and 1,3-heptadiene. Among these, from the viewpoint of industrial availability, 1,3-butadiene and isoprene are preferred, and 1,3-butadiene is most preferred. One of these may be singly used, or two or more of these may be used in combination.

The aromatic vinyl monomer is not especially limited, and examples include styrene, o-methylstyrene, m-methylstyrene, p-methylstyrene, o,p-dimethylstyrene, o-ethylstyrene, m-ethylstyrene, p-ethylstyrene, $\alpha$-methylstyrene, vinyl ethyl benzene, vinyl xylene, vinyl naphthalene, and diphenylethylene. Among these, from the viewpoint of industrial availability, styrene is preferred. One of these may be singly used, or two or more of these may be used in combination. When such a constitutional unit based on an aromatic vinyl monomer is contained, balance among break strength, fuel economy, wet skid resistance, and abrasion resistance obtained in the form of a tire tends to be further improved.

The additional monomer is not especially limited, and examples include nonconjugated polyene compound monomers such as ethylidene norbornene, dicyclopentadiene, vinyl norbornene, and divinylbenzene; and cyclic nonconjugated polyene compound monomers such as dicyclopentadiene, vinyl norbornene, and ethylidene norbornene. When such an additional monomer is used, balance among break strength, fuel economy, wet skid resistance, and abrasion resistance obtained when the rubber-like polymer is used in a tire tends to be further improved. One of these may be singly used, or two or more of these may be used in combination.

As a method for copolymerizing at least ethylene and a conjugated diene monomer, methods described in International Publication Nos. WO2019/078083, WO2019/171679, and WO2019/142501 are preferred. A method in which ethylene, a conjugated diene monomer, and an additional monomer if necessary, are copolymerized by coordination polymerization with various additives under various conditions is preferred. Examples of the conjugated diene monomer are the same as the examples of the conjugated diene monomer described above.

The iodine value of the rubber-like polymer of the present embodiment is 10 or more, preferably 15 or more, more preferably 30 or more, further preferably 50 or more, and still further preferably 70 or more. When the iodine value is 10 or more, ease of crosslinking, and fuel economy and on-snow performance obtained in the form of a tire are further improved. On the other hand, the iodine value of the rubber-like polymer is 200 or less, preferably 170 or less, more preferably 140 or less, further preferably 110 or less, and most preferably 80 or less. When the iodine value is 200 or less, abrasion resistance obtained in the form of a tire is further improved.

The iodine value can be measured in accordance with a method described in "JIS K0070: 1992". The iodine value is a value, in terms of the weight in grams of iodine, corresponding to an amount of halogen reacting with 100 g of a target substance, and hence the iodine value is expressed in the unit of "g/100 g".

The iodine value of the rubber-like polymer of the present embodiment can be adjusted in accordance with the amount of a double bond contained in the conjugated diene monomer unit. In a method for producing a rubber-like polymer described below, for example, if a conjugated diene monomer and an aromatic vinyl monomer are copolymerized, the iodine value tends to be lower when the content of the conjugated diene monomer is lower, and alternatively, if a conjugated diene monomer is hydrogenated, the iodine value tends to be lower when a hydrogenation rate is higher.

A content of the ethylene structure contained in the rubber-like polymer of the present invention is 3% by mass or more, and preferably 5% by mass or more. When the content of the ethylene structure is 3% by mass or more, excellent abrasion resistance is obtained. The content of the ethylene structure is preferably 90% by mass or less, and more preferably 80% by mass or less. When the content of the ethylene structure is 90% by mass or less, rubber elasticity tends to be further improved.

The rubber-like polymer may be produced by subjecting a diene-based copolymer having an aromatic portion and a conjugated diene portion to a hydrogenation reaction to change a part of a double bond portion included in the conjugated diene portion to an ethylene portion, or may be produced by random copolymerizing an aromatic vinyl compound, a conjugated diene compound, and ethylene. In particular, from the viewpoint of production cost, the rubber-like polymer is obtained preferably by subjecting a diene-based copolymer to a hydrogenation reaction. A content of an ethylene portion in a hydrogenated product of the diene-based copolymer is controlled by controlling an amount of ethylene to be added, or a conjugated diene compound and a hydrogenation rate thereof, and thus, the content of the ethylene structure can be controlled to 3% by mass or more.

In the present embodiment, a constitutional unit based on an aromatic vinyl compound is sometimes referred to as an "aromatic portion", a constitutional unit based on a conjugated diene compound is sometimes referred to as a "conjugated diene portion", and an ethylene structure is sometimes referred to as an "ethylene portion".

A content of the aromatic vinyl monomer block contained in the rubber-like polymer of the present embodiment is less than 10% by mass, preferably 7% by mass or less, more preferably 5% by mass or less, and further preferably 3% by mass or less. When the content of the aromatic vinyl monomer block is less than 10% by mass, fuel economy obtained in the form of a tire is further improved. A lower limit of the content of the aromatic vinyl monomer block is not limited, and can be 1% by mass or more.

In the present embodiment, the term "aromatic vinyl monomer block" refers to a structure including a chain of eight or more aromatic vinyl monomer units. From the viewpoint of fuel economy obtained in the form of a tire, the number of such aromatic vinyl monomer blocks in the rubber-like polymer of the present embodiment is preferably small or zero.

A method for measuring the aromatic vinyl monomer block is not especially limited, and for example, when the rubber-like polymer is a butadiene-styrene copolymer, the polymer is decomposed by Kolthoff method (method described in I. M. KOLTHOFF, et al., J. Polym. Sci. 1, 429 (1946)) to analyze an amount of polystyrene insoluble in methanol. As another method, as described in International Publication No. WO2014-133097, a known method such as measurement of a chain of styrene units by NMR can be employed for the measurement.

A content of the conjugated diene monomer unit contained in the rubber-like polymer of the present embodiment is 2% by mass or more, preferably 3% by mass or more, and further preferably 6% by mass or more. A double bond contained in the conjugated diene monomer unit can become a crosslinkable unsaturated group. The content of the conjugated diene monomer unit in the rubber-like polymer closely relates to the iodine value. When the content of the conjugated diene monomer unit is 2% by mass or more, ease of crosslinking, and fuel economy and on-snow performance obtained in the form of a tire are excellent. The content of the conjugated diene monomer unit is preferably 50% by mass or less, more preferably 30% by mass or less, and further preferably 20% by mass or less. When the content of the conjugated diene monomer unit is 50% by mass or less, abrasion resistance obtained in the form of a tire tends to be excellent.

The rubber-like polymer of the present embodiment preferably contains an aromatic vinyl monomer unit. A content of the aromatic vinyl monomer unit is preferably 5% by mass or more, more preferably 7% by mass or more, and further preferably 9% by mass or more. When the content of the aromatic vinyl monomer unit is 5% by mass or more, steering stability obtained in the form of a tire tends to be excellent. The content of the aromatic vinyl monomer unit is preferably 40% by mass or less, more preferably 35% by mass or less, and further preferably 30% by mass or less. When the content of the aromatic vinyl monomer unit is 40% by mass or less, fuel economy obtained in the form of a tire tends to be further improved.

From the viewpoint that brake performance obtained in the form of a tire is excellent, a 1,2-vinyl bond content in the conjugated diene monomer unit contained in the rubber-like polymer of the present embodiment is preferably 10 mol% or more, more preferably 20 mol% or more, and further preferably 30 mol% or more. From the viewpoint that fuel economy obtained in the form of a tire is excellent, the 1,2-vinyl bond content in the conjugated diene monomer unit is preferably 60 mol% or less, more preferably 50 mol% or less, and further preferably 40 mol% or less.

Assuming that the total amount of the rubber component including the rubber-like polymer and the natural rubber is 100 parts by mass, the content of the rubber-like polymer is 10 parts by mass or more, preferably 20 parts by mass or more, and more preferably 30 parts by mass or more. When the content of the rubber-like polymer is 10 parts by mass or more, fuel economy and abrasion resistance obtained in the form of a tire are excellent. From the viewpoint of improving on-snow performance obtained in the form of a tire, the content of the rubber-like polymer is 90 parts by mass or less, preferably 70 parts by mass or less, further preferably 50 parts by mass or less, and still further preferably 40 parts by mass or less.

It is noted hereinafter that a value expressed in the unit of "parts by mass" is a value obtained by assuming that the total amount of the rubber component including the rubber-like polymer and the natural rubber is 100 parts by mass unless otherwise stated.

A method for identifying the type and the content rate of the rubber component contained in the rubber composition of the present embodiment is not especially limited, and these can be identified by employing NMR. For example, it has been previously reported (JSR TECHNICAL REVIEW No. 126/2019) that solid state $^{13}$C-C-NMR can be employed for quantitatively calculating a ratio among a styrene unit, 1,2-vinyl, 1,4-vinyl, a 1,4-cis bond, and an isoprene unit contained in a conjugated diene-based polymer composition.

The rubber-like polymer of the present embodiment has a solubility parameter (hereinafter referred to as the SP value) of preferably 16.8 (MPa)$^{1/2}$ or more and 17.4 (MPa)$^{1/2}$ or less. When the SP value of the rubber-like polymer falls in this range, compatibility between the rubber-like polymer and the natural rubber (SP value: 17.19 (MPa)$^{1/2}$) is improved, and when the rubber-like polymer is formed into a vulcanizate, silica is homogeneously dispersed therein and hence friction among silica particles is reduced, and therefore, fuel economy tends to be improved.

In addition, from the viewpoint of improvement of crack resistance obtained in the form of a tire, the SP value of the rubber-like polymer is more preferably 17.0 (MPa)$^{1/2}$ or more and 17.2 (MPa)$^{1/2}$ or less. When the SP value of the rubber-like polymer is 17.0 (MPa)$^{1/2}$ or more, the rubber-like polymer is compatible with the natural rubber to eliminate the interface therebetween, and therefore, there is a tendency that stress concentration is inhibited and crack resistance is improved when in the form of a tire.

The SP value of the rubber-like polymer is calculated in accordance with an equation, (SP value) = ((molar cohesive energy)/(molar volume))$^{1/2}$. When the rubber-like polymer contains two or more different monomers, the molar cohesive energy has additivity. Therefore, the molar cohesive energy of the rubber-like polymer is calculated as an average (an average distributed in accordance with content rates) of molar coherent energies of the respective components in accordance with their content rates (mol%). The molar volume also has additivity in the same manner as the molar coherent energy, and the molar volume of the rubber-like polymer is calculated as an average (an average distributed in accordance with content rates) of molar volumes of the respective components in accordance with their content rates (mol%).

The two or more different components are not especially limited, and examples include conjugated diene compound monomer units and aromatic vinyl hydrocarbon monomer units incorporated in accordance with a bonding pattern of non-hydrogenated 1,2-bond, hydrogenated 1,2-bond, non-hydrogenated 3,4-bond, hydrogenated 3,4-bond, non-hydrogenated 1,4-bond or hydrogenated 1,4-bond. An amount of each conjugated diene compound monomer unit incorporated in each bonding pattern can be measured by NMR or the like.

It is noted that molar volumes and molar coherent energies of conjugated diene compound monomer units and aromatic vinyl hydrocarbon monomer units incorporated in accordance with a bonding pattern of non-hydrogenated 1,2-bond, hydrogenated 1,2-bond, non-hydrogenated 3,4-bond, hydrogenated 3,4-bond, non-hydrogenated 1,4-bond or hydrogenated 1,4-bond, and other monomer units are obtained in accordance with a method described in J. Bicerano, Prediction of Polymer Properties, 3rd Ed. Marcel Dekker, 2002 (Bicerano method).

The SP value can be controlled to fall in the above-described numerical range by controlling the 1,2-vinyl bond content in a conjugated diene-based monomer unit, the amount of an aromatic vinyl compound, and a hydrogenation rate. As a method for obtaining the SP value of 16.8 (MPa)$^{1/2}$ or more and 17.4 (MPa)$^{1/2}$ or less, the SP value can be set within the range, for example, when the amount of the aromatic vinyl compound is 5 to 30% by mass, the 1,2-vinyl bond content in the conjugated diene-based monomer unit is 20 to 50 mol%, or the hydrogenation rate is 40 to 90 mol%.

The rubber-like polymer of the present embodiment has a glass transition temperature of preferably -35°C or less, more preferably -45°C or less, and further preferably -50°C or less. The glass transition temperature of the rubber-like polymer can be controlled to fall in this range by adjusting the amount of an aromatic vinyl compound, the 1,2-vinyl bond content, and the hydrogenation rate. When the glass transition temperature of the rubber-like polymer is within the above-described range, there is a tendency that a tread is easily softened under a low temperature condition and on-snow performance is excellent when the rubber-like polymer is formed into a tire.

The glass transition temperature can be controlled to fall in the above-described numerical range by controlling the 1,2-vinyl bond content in the conjugated diene-based monomer unit and the amount of the aromatic vinyl compound. Specifically, the glass transition temperature can be lowered by reducing the amount of the aromatic vinyl compound or reducing the 1,2-vinyl bond content. As a method for setting the glass transition temperature to -35°C or less, the glass transition temperature can be set to fall in the above-described range when the amount of aromatic vinyl is 5 to 30% by mass, or the 1,2-vinyl bond content in the conjugated diene-based monomer unit is 20 to 50 mol%.

With respect to the glass transition temperature, a peak top (an inflection point) of a DSC differential curve obtained by recording a DSC curve during temperature increase in a prescribed temperature range in accordance with ISO 22768:2006 is defined as the glass transition temperature. Specifically, the glass transition temperature can be measured in accordance with a method described in examples below.

A lower limit of the glass transition temperature of the rubber-like polymer is not especially limited, and is preferably -90°C or more, more preferably -80°C or more, and further preferably -70°C or more. When the glass transition temperature is within this range, wet grip performance tends to be excellent.

The rubber-like polymer of the present embodiment preferably contains a nitrogen atom from the viewpoint of improvement of fuel economy obtained in the form of a tire. A nitrogen atom can be introduced with a modifier. Thus, dispersibility of a silica-based inorganic filler used as a reinforcing material of a tire tends to be further improved.

From the viewpoint of dispersibility of the silica-based inorganic filler used as the reinforcing material of a tire, the rubber-like polymer of the present embodiment has a modification ratio of preferably 40% by mass or more, more preferably 60% by mass or more, and further preferably 70% by mass or more. An upper limit of the modification ratio is not especially limited, and is preferably 98% or less, more preferably 95% or less, and further preferably 90% or less from the viewpoint that a viscosity of a kneaded compound is lowered to improve processability.

Herein, the term "modification ratio" refers to a mass ratio of a polymer having a nitrogen atom-containing functional group to the total amount of the rubber-like polymer. A position where a nitrogen atom is introduced in the rubber-like polymer of the present embodiment may be any one of a polymerization starting end, a molecular chain (including a graft chain), and a polymerization end of the rubber-like polymer.

When the rubber-like polymer of the present embodiment is produced by performing hydrogenation after polymerizing a conjugated diene monomer, an introduction method using a coupling agent containing a tin atom or a nitrogen atom is preferably employed from the viewpoints of polymerization productivity, a high modification ratio, and fuel economy obtained in the form of a tire.

As a coupling agent containing a nitrogen atom, from the viewpoints of polymerization productivity and a high modification ratio, an isocyanate compound, an isothiocyanate compound, an isocyanuric acid derivative, a nitrogen group-containing carbonyl compound, a nitrogen group-containing vinyl compound, a nitrogen group-containing epoxy compound, a nitrogen group-containing alkoxysilane compound and the like are preferred.

From the viewpoint of improvement of processability in producing a tire, the coupling agent preferably has a larger branch number. The branch number is not especially limited, and is preferably 3 or more, and more preferably 4 or more from the viewpoint of the improvement of processability. An upper limit of the branch number is not especially limited, and is preferably 30 or less from the viewpoint of productivity.

As such a coupling agent containing a nitrogen atom, from the viewpoints of polymerization productivity of the rubber-like polymer, a high modulation ratio, and a tensile strength obtained in the form of a tire, a nitrogen group-containing alkoxysilane compound is more preferred.

The nitrogen group-containing alkoxysilane compound is not especially limited, and examples include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

When the rubber-like polymer of the present embodiment is produced by copolymerizing ethylene and a conjugated diene monomer, from the viewpoint of fuel economy, abrasion resistance, and flexibility obtained in the form of a tire, a tin atom, a nitrogen atom, or a silicon atom is preferably contained. From the viewpoint of productivity of the rubber-like polymer, it is preferable to employ a method in which a coupling agent containing a tin atom, a nitrogen atom, or a silicon atom is used for introduction when a polymerization reaction reaches 100%.

Examples of the coupling agent containing a tin atom, a nitrogen atom, or a silicon atom include a tin-containing compound such as dioctyltin bis(1-octadecyl maleate), an isocyanate compound such as 4,4-diphenylmethane diisocyanate, and an alkoxysilane compound such as glycidylpropyltrimethoxysilane.

From the viewpoints of shape stability of a molded article of the rubber composition, and a tensile strength and abrasion resistance of a crosslinked product using the rubber composition, a weight average molecular weight of the rubber-like polymer is preferably 150,000 or more, and more preferably 200,000 or more. On the other hand, from the viewpoint of processability obtained when the rubber composition is formed as a crosslinking composition, the weight average molecular weight is preferably 1,000,000 or less, more preferably 500,000 or less, and further preferably 400,000 or less.

From the viewpoint of fuel economy obtained when the rubber composition is used for a tire, a molecular weight distribution (= weight average molecular weight/number average molecular weight) of the rubber-like polymer is preferably 2.0 or less, more preferably 1.8 or less, and further preferably 1.6 or less. On the other hand, from the viewpoint of processability obtained when the rubber composition is formed as a crosslinking composition, the molecular weight distribution of the rubber-like polymer is preferably 1.05 or more, more preferably 1.2 or more, and further preferably 1.4 or more.

The weight average molecular weight and the molecular weight distribution can be calculated based on a molecular weight, in terms of polystyrene, measured by GC (gel permeation chromatography).

At a final stage of polymerization process of the rubber-like polymer, a deactivating agent, a neutralizer or the like may be added if necessary. Examples of the deactivating agent include, but are not limited to, water; and alcohols such as methanol, ethanol, and isopropanol. Here, the final stage of polymerization process refers to a state where 95% or more of monomers added have been consumed in polymerization.

Examples of the neutralizer include, but are not limited to, carboxylic acids such as stearic acid, oleic acid, and versatic acid (a carboxylic acid mixture having 9 to 11 carbon atoms, mainly 10 carbon atoms, and having many branches); an aqueous solution of an inorganic acid, and carbon dioxide gas.

At the final stage of polymerization process of the rubber-like polymer, a rubber stabilizer is preferably added from the viewpoints of prevention of gel formation and processing stability.

As the rubber stabilizer, any of known stabilizers, not limited to the following, can be used, and antioxidants such as 2,6-di-tert-butyl-4-hydroxytoluene (hereinafter sometimes referred to as "BHT"), n-octadecyl-3-(4'-hydroxy-3',5'-di-tert-butylphenol)propionate, and 2-methyl-4,6-bis[(octylthio)methyl]phenol are preferred.

At the final stage of polymerization process or the like of the rubber-like polymer, a rubber softener can be added if necessary for improving productivity of the polymer, and processability obtained when an inorganic filler or the like is blended in producing a tire.

The rubber softener is not especially limited, and examples include an extender oil, a liquid rubber, and a resin. From the viewpoint of processability, productivity, and economic performance, an extender oil is preferred.

As a method for adding a rubber softener to a conjugated diene-based polymer, although not limited to the following, a method in which the rubber softener is added to a polymer solution to be mixed, and the thus obtained polymer solution containing the rubber softener is subjected to desolvation is preferably employed.

Preferable examples of the extender oil include an aromatic oil, a naphthenic oil, and a paraffin oil. Among these, from the viewpoint of environmental safety, and from the viewpoint of oil bleed prevention and wet grip characteristics, an aroma substitute oil containing 3% by mass or less of polycyclic aromatic (PCA) component in accordance with the IP 346 method is preferred. Examples of the aroma substitute oil include TDAE (treated distillate aromatic extracts) and MES (mild extraction solvate) described in Kautschunk Gummi Kunststoffe 52 (12) 799 (1999), and RAE (residual aromatic extracts).

A content of the extender oil in the rubber composition of the present embodiment is preferably 30% by mass or less, more preferably 20% by mass or less, further preferably 10% by mass or less, and most preferably 5% by mass or less from the viewpoint of degradation over time caused in the form of a tire.

Preferable examples of the resin include, but are not limited to, an aromatic petroleum resin, a coumaroneindene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenolformaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol.

One of these resins may be singly used, or two or more of these may be used in combination. When hydrogenated, all unsaturated groups may be hydrogenated, or some may be left not hydrogenated.

As an effect obtained by adding a resin, not only processability in obtaining a rubber composition containing a conjugated diene-based polymer, a filler and the like is improved but also break strength obtained in the form of a vulcanizate tends to be improved.

An amount of the extender oil, the liquid rubber or the resin to be added as the rubber softener is preferably 5 parts by mass or more, more preferably 10 parts by mass or more, and further preferably 20 parts by mass or more with respect to 100 parts by mass of the total amount of the rubber component including the rubber-like polymer and the natural rubber. When the amount to be added falls in this range, abrasion resistance and crack resistance tend to be excellent. The amount is preferably 35 parts by mass or less, more preferably 30 parts by mass or less, and further preferably 25 parts by mass or less from the viewpoint of improvement of low fuel consumption performance.

As a method for obtaining the rubber-like polymer of the present embodiment from the polymer solution with the solvent removed, any of known methods can be employed. Examples of the methods include a method in which the solvent is separated by steam stripping or the like, and the polymer is then filtered, and obtained by dehydration and drying, a method in which the solution is concentrated in a flushing tank, and the resultant is devolatilized with a vent extruder or the like, and a method in which the solution is directly devolatilized with a drum dryer or the like.

[Natural Rubber]

The rubber composition of the present embodiment contains the natural rubber. Assuming that the total amount of the rubber component including the rubber-like polymer and the natural rubber is 100 parts by mass, a content of the natural rubber is 10 parts by mass or more, preferably 30 parts by mass or more, more preferably 50 parts by mass or more, and further preferably 60 parts by mass or more. When the content of the natural rubber is within this range, on-snow performance and crack resistance obtained in the form of a tire are further improved. From the viewpoint of improvement of fuel economy obtained in the form of a tire, the content of the natural rubber is 90 parts by mass or less, preferably 80 parts by mass or less, and more preferably 70 parts by mass or less.

The natural rubber is not especially limited, and examples include smoked sheets RSS No. 3 to 5, SMR, and an epoxidized natural rubber from the viewpoints of a large amount of a high molecular weight component, and excellent break strength.

[Silica-based Inorganic Filler]

The rubber composition of the present embodiment contains the silica-based inorganic filler. From the viewpoint of improvement of grip performance and steering stability obtained in the form of a tire, a content of the silica-based inorganic filler is 60 parts by mass or more, preferably 65 parts by mass or more, and more preferably 75 parts by mass or more with respect to 100 parts by mass of the total amount of the rubber-like polymer and the natural rubber. From the viewpoint of improvement of fuel economy obtained in the form of a tire, the content of the silica-based inorganic filler is 120 parts by mass or less, preferably 100 parts by mass or less, and more preferably 90 parts by mass or less.

The silica-based inorganic filler is not especially limited, any of known fillers can be used, a solid particle containing $SiO_2$ or $Si_3Al$ as a constitutional unit is preferred, and it is more preferable that $SiO_2$ or $Si_3Al$ is contained as a principal component of the constitutional unit. Here, the principal component refers to a component contained in the silica-based inorganic filler in a content of 50% by mass or more, preferably 70% by mass or more, and more preferably 80% by mass or more.

Examples of the silica-based inorganic filler include, but are not limited to, inorganic fibrous materials such as silica, cray, talk, mica, diatomite, wollastonite, montmorillonite, zeolite, and glass fiber. An example of a commercially available product of the silica-based inorganic filler includes one available under a trade name of "Ultrasil 7000GR" manufactured by Evonik Degussa. Other examples include a silica-based inorganic filler having a hydrophobized surface, and a mixture of a silica-based inorganic filler and an inorganic filler different from a silica-based filler. Among these, from the viewpoints of strength and abrasion resistance, silica and glass fiber are preferred, and silica is more preferred. Examples of the silica include dry silica, wet silica, and synthetic silicate silica. Among these, wet silica is further preferred from the viewpoint of excellent balance between an effect of improving a fracture property and wet skid resistance.

From the viewpoint of obtaining practically good abrasion resistance and fracture property in the modified conjugated diene-based polymer composition, a nitrogen adsorption specific surface area obtained by a BET adsorption method of the silica-based inorganic filler is preferably 100 $m^2$/g or more and 300 $m^2$/g or less, and more preferably 170 $m^2$/g or more and 250 $m^2$/g or less. If necessary, a silica-based inorganic filler having a comparatively small specific surface area (of, for example, 200 $m^2$/g or less) and a silica-based inorganic filler having a comparatively large specific surface area (of, for example 200 $m^2$/g or more) can be used in combination. Thus, good abrasion resistance and fracture property can be highly balanced with a low hysteresis loss property.

[Carbon Black]

The rubber composition of the present embodiment preferably contains, in addition to the silica-based inorganic filler, 0.5 to 100 parts by mass of carbon black from the viewpoint of improvement of steering stability.

The carbon black is not especially limited, and for example, carbon blacks of SRF, FEF, HAF, ISAF and SAF classes can be used. Among these, a carbon black having a nitrogen adsorption specific surface area of 50 $m^2$/g or more and dibutyl phthalate (DBP) oil absorption of 80 mL/100 g or more is preferred from the viewpoints of extrusion moldability and rolling resistance.

An amount of the carbon black to be blended is preferably 0.5 parts by mass or more, more preferably 3 parts by mass or more, and further preferably 5 parts by mass or more with respect to 100 parts by mass of the total amount of the rubber-like polymer and the natural rubber from the viewpoint of improvement of abrasion resistance. From the viewpoint of improvement of fuel economy, the amount of the carbon black to be blended is preferably 100 parts by mass or less, more preferably 50 parts by mass or less, and further preferably 20 parts by mass or less.

(Metal Oxide and Metal Hydroxide)

The rubber composition of the present embodiment may contain a metal oxide or a metal hydroxide in addition to the silica-based inorganic filler and the carbon black.

The metal oxide refers to a solid particle containing, as a principal component of a constituent unit, a substance represented by chemical formula $M_xO_y$ (wherein M represents a metal atom, and x and y each independently represent an integer of 1 to 6). Examples include alumina, titanium oxide, magnesium oxide and zinc oxide. A mixture of a metal oxide and an inorganic filler different from the metal oxide can be used. The metal hydroxide is not especially limited, and examples include aluminum hydroxide, magnesium hydroxide and zirconium hydroxide.

(Silane Coupling Agent)

The rubber composition of the present embodiment may contain a silane coupling agent. The silane coupling agent has a group having affinity with or a binding property to each of the rubber component, the rubber-like polymer and the silica-based inorganic filler, and has a function to make close the interaction among these. In general, a compound containing, in one molecule, a sulfur bond portion and an alkoxysilyl group or silanol group portion is used.

Examples of the silane coupling agent include, but are not limited to, silane coupling agents having a mercapto group, such as 3-mercaptopropyltrimethoxysilane, 3-mercaptopropylethoxysilane, 2-mercaptoethyltrimethoxysilane, 2-mercaptoethyltriethoxysilane, ethoxy(3-mercaptopropyl)bis(3,6,9,12,15-pentaoxaoctacosan-1-yloxy)silane [manufactured by Evonik Degussa: Si363], and NXT-Z30, NXT-Z45, NXTZ60 and NXT silane manufactured by Momentive, bis[3-(triethoxysilyl)-propyl]-tetrasulfide, bis[3-(triethoxysilyl)-propyl]-disulfide, bis[2-(triethoxysilyl)-ethyl]-tetrasulfide, bis(3-triethoxysilylpropyl)trisulfide, bis[2-(triethoxysilyl)-ethyl]-tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyltetrasulfide.

Among these, from the viewpoint of a high reinforcing effect, bis[3-(triethoxysilyl)-propyl]-disulfide, silane coupling agents having a mercapto group, such as ethoxy(3-mercaptopropyl)bis(3,6,9,12,15-pentaoxaoctacosan-1-yloxy)silane [manufactured by Evonik Degussa: Si363], and NXT-Z30, NXT-Z45, NXTZ60 and NXT silane manufactured by Momentive, and bis[3-(triethoxysilyl)-propyl]-tetrasulfide are preferred. One of these silane coupling agents can be singly used, or two or more of these can be used in combination.

An amount of the silane coupling agent to be blended is, from the viewpoint of further remarkably obtaining the effect to make close the interaction between the rubber component and the silica-based inorganic filler, preferably 0.1 parts by mass or more, more preferably 0.5 parts by mass or more, and further preferably 1 part by mass or more with respect to 100 parts by mass of the total amount of the rubber-like polymer and the natural rubber. From the viewpoint of obtaining good processability, the amount of the silane coupling agent to be blended is preferably 30 parts by mass or less, more preferably 20 parts by mass or less, and further preferably 15 parts by mass or less.

(Rubber Softener)

The rubber composition of the present embodiment may contain a rubber softener for improving processability. As the rubber softener, for example, a mineral oil-based rubber softener, or a liquid or low molecular weight synthetic softener is suitably used. The mineral oil-based rubber softener, which is also designated as a process oil or an extender oil, is used for softening, expanding and improving processability of a rubber. The mineral oil-based rubber softener is a mixture of an aromatic ring, a naphthene ring and a paraffin chain, and one in which the number of carbon atoms of the paraffin chain is 50% or more of the number of all carbon atoms is designated as a paraffin-based softener, one in which the number of carbon atoms of the naphthene ring is 30% to 45% is designated as a naphthene-based softener, and one in which the number of aromatic carbon atoms exceeds 30% is designated as an aromatic-based softener. As a rubber softener to be used together with a modified conjugated diene-aromatic vinyl copolymer, one having an appropriate aromatic content is preferred because such a softener tends to have high affinity with the copolymer.

An amount of the rubber softener to be blended is preferably 0 part by mass or more, more preferably 10 parts by mass or more, and further preferably 30 parts by mass or more with respect to 100 parts by mass of the total amount of the rubber-like polymer and the natural rubber from the viewpoint of improvement of processability. From the viewpoint that occurrence of bleeding out can be suppressed to prevent the surface of the rubber composition from being sticky, the amount is preferably 100 parts by mass or less, more preferably 70 parts by mass or less, and further preferably 40 parts by mass or less.

(Kneading Method)

Examples of a method for mixing the constituent materials of the rubber composition of the present embodiment, such as the rubber component including the rubber-like polymer and the natural rubber, the silica-based inorganic filler, the carbon black and another filler, the silane coupling agent, and the additive such as the rubber softener, include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.

Among these, a melt kneading method using a roll, a Banbury mixer, a kneader or an extruder is preferred from the viewpoint of productivity and good kneadability. Either of a method in which the constituent materials of the rubber composition of the present embodiment are kneaded all at once, and a method in which the materials are mixed dividedly plural times can be employed.

The rubber composition of the present embodiment may be obtained as a vulcanized composition through vulcanization treatment with a vulcanizing agent. Examples of the vulcanizing agent include, but are not limited to, a radical generator such as an organic peroxide or an azo compound, an oxime compound, a nitroso compound, a polyamine compound, sulfur, and a sulfur compound.

The sulfur compound encompasses sulfur monochloride, sulfur dichloride, a disulfide compound, and a polymer polysulfur compound.

A content of the vulcanizing agent is, from the viewpoint of improvement of breaking strength through the reinforcing effect, preferably 0.01 parts by mass or more, more preferably 0.1 parts by mass or more, and further preferably 1 part by mass or more with respect to 100 parts by mass of the total amount of the rubber-like polymer and the natural rubber. From the viewpoints of obtaining flexibility and improving elongation at break, the content of the vulcanizing agent is preferably 20 parts by mass or less, more preferably 15 parts by mass or less, and further preferably 10 parts by mass or less.

As a vulcanization method, any of conventionally known methods can be applied, and a vulcanization temperature is not especially limited, and is preferably 120°C or more, more preferably 140°C or more, and further preferably 150°C or more from the viewpoint that vulcanization time can be reduced to improve production efficiency. From the viewpoint of inhibiting thermal deterioration caused in vulcanization, the vulcanization temperature is preferably 200°C or less, more preferably 180°C or less, and further preferably 160°C or less.

A vulcanization accelerator may be used in vulcanization if necessary.

As the vulcanization accelerator, any of conventionally known materials can be used, and examples include, but are not limited to, vulcanization accelerators such as a sulfenamide-based compound, a guanidine-based compound, a thiuram-based compound, an aldehyde-amine-based compound, an aldehyde-ammonia-based compound, a thiazole-based compound, a thiourea-based compound, and a dithiocarbamate-based compound.

Examples of a vulcanization aid include, but are not limited to, zinc powder and stearic acid.

A content of the vulcanization accelerator is preferably 0.01 parts by mass or more and 20 parts by mass or less, and more preferably 0.1 parts by mass or more and 15 parts by mass or less with respect to 100 parts by mass of the total amount of the rubber-like polymer and the natural rubber.

In the conjugated diene-based polymer composition of the present embodiment, various additives such as an additional softener and an additional filler different from those described above, a heat stabilizer, an antistatic agent, a weathering stabilizer, an anti-aging agent, a colorant, and a lubricant may be used as long as the objects of the present embodiment are not impaired.

As the additional softener, any of known softeners can be used. Specific examples of the additional filler include calcium carbonate, magnesium carbonate, aluminum sulfate, and barium sulfate.

As the heat stabilizer, the antistatic agent, the weathering stabilizer, the anti-aging agent, the colorant, and the lubricant, any of known materials can be respectively used.

[Tire]

The rubber composition of the present embodiment is suitably used as a rubber composition for a tire. In other words, a tire of the present embodiment contains the rubber composition of the present embodiment.

The rubber composition for a tire of the present embodiment can be used in, but not limited to, various tires such as a fuel efficient tire, an all-season tire, a high performance tire, and a studless tire; and various portions of a tire such as a tread, a carcass, a sidewall, and a bead portion.

In particular, the rubber composition for a tire is excellent in abrasion resistance, on-snow performance, and crack resistance obtained in the form of a vulcanizate, and hence is more suitably used in a tread of an all-season tire or a snow tire.

Examples

Now, the present embodiment will be more specifically described with reference to specific examples and comparative examples, and it is noted that the present embodiment is not limited to the following examples and comparative examples at all.

Various physical properties of the examples and comparative examples were measured by the following methods.

(Weight Average Molecular Weight (Mw) of Rubber-like Polymer)

A chromatogram was measured with a GPC measuring apparatus including a series of three columns using a polystyrene-based gel as a filler, and a weight average molecular weight (Mw) was obtained based on a calibration curve obtained using standard polystyrene. Specific measurement conditions are described below. The measurement was performed with 20 μL of the following measurement solution injected into the GPC measuring apparatus.

(Measurement Conditions)

    Apparatus: trade name "HLC-8320GPC" manufactured by Tosoh Corporation
    Eluent: tetrahydrofuran (THF) containing 5 mmol/L of triethylamine
    Guard column: trade name "TSKguardcolumn Super H-H" manufactured by Tosoh Corporation
    Separation columns: trade names "TSKgel Super H5000", "TSKgel Super H6000", and "TSKgel Super H7000" manufactured by Tosoh Corporation in series in the stated order
    Oven temperature: 40°C
    Flow rate: 0.6 ml/min
    Detector: RI detector (trade name "HLC8020" manufactured by Tosoh Corporation)
    Measurement solution: measurement solution obtained by dissolving 10 mg of a measurement sample in 20 mL of THF

(Mooney Viscosities of Rubber-like Polymer and Rubber Composition)

A Mooney viscosity was measured with a Mooney viscometer (trade name "VR1132" manufactured by Ueshima Seisakusho Co., Ltd.) using an L rotor in accordance with ISO 289. Specifically, a sample was first preheated for 1 minute at 100°C, the rotor was rotated at 2 rpm, and torque was measured after 4 minutes to be defined as a Mooney viscosity (ML (1+4)) at 100°C.

(Modification Ratio of Rubber-like Polymer)

The modification ratio of each rubber-like polymer was measured by column adsorption GPC as follows by utilizing a characteristic that a modified rubber-like polymer adsorbs on a column.

A sample solution containing a sample and low molecular weight internal standard polystyrene was measured for an amount of adsorption to a silica-based column based on a difference between a chromatogram measured with a column filled with a polystyrene-based gel and a chromatogram measured with a column filled with a silica-based gel, and thus, a modification ratio was obtained.

GPC measurement conditions using a polystyrene-based column were as follows. The measurement was performed with 20 μl of the following measurement solution injected into a GPC measuring apparatus.

(GPC Measurement Conditions using Polystyrene-based Column)

Apparatus: trade name "HLC-8320GPC" manufactured by Tosoh Corporation
Eluent: THF containing 5 mmol/L of triethylamine
Guard column: trade name "TSKguardcolumn Super H-H" manufactured by Tosoh Corporation
Separation columns: trade names "TSKgel Super H5000", "TSKgel Super H6000", and "TSKgel Super H7000" manufactured by Tosoh Corporation in series in the stated order
Oven temperature: 40°C
Flow rate: 0.6 ml/min
Detector: RI detector (trade name "HLC8020" manufactured by Tosoh Corporation)
Measurement solution: measurement solution obtained by dissolving 10 mg of a sample and 5 mg of standard polystyrene in 20 mL of THF

GPC measurement conditions using a silica-based column were as follows. The measurement was performed with 50 μl of the following measurement solution injected into a GPC measuring apparatus.

(GPC Measurement Conditions using Silica-based Column)

Apparatus: trade name "HLC-8320GPC" manufactured by Tosoh Corporation
Eluent: THF
Guard column: trade name "DIOL 4.6 × 12.5 mm 5 micron" manufactured by GL Sciences Inc.
Separation columns: trade names "Zorbax PSM-1000S", "PSM-300S", and "PSM-60S" manufactured by Agilent Technologies Japan, Ltd. in series in the stated order
Oven temperature: 40°C
Flow rate: 0.5 ml/min
Detector: RI detector (trade name "HLC8020" manufactured by Tosoh Corporation)

Calculation Method for Modification Ratio: A modification ratio (%) was obtained in accordance with the following equation assuming that a whole peak area of the chromatogram obtained with the polystyrene-based column is 100, that a peak area of the sample is P1, that a peak area of the standard polystyrene is P2, that a whole peak area of the chromatogram obtained with the silica-based column is 100, that a peak area of the sample is P3, and that a peak area of the standard polystyrene is P4:

$$\text{Modification ratio (\%)} = [1 - (P2 \times P3)/(P1 \times P4)] \times 100$$

wherein P1 + P2 = P3 + P4 = 100.

(Amount of Bound Styrene in Rubber-like Polymer)

A measurement sample was obtained by dissolving 100 mg of a sample in 100 mL of chloroform. An amount of adsorption by a phenyl group of styrene at an ultraviolet adsorption wavelength (about 254 nm) was used to measure an amount of bound styrene (% by mass) with respect to 100% by mass of each rubber-like polymer used as the sample. As a measuring apparatus, a spectrophotometer "UV-2450" manufactured by Shimadzu Corporation was used.

(Microstructure of Butadiene Portion (1,2-vinyl Bond Content) of Rubber-like Polymer)

A measurement sample was obtained by dissolving 50 mg of a sample in 10 mL of carbon disulfide. An infrared spectrum was measured in a range of 600 to 1000 cm$^{-1}$ with a solution cell used, and based on an absorbance at a prescribed wavelength, a microstructure of a butadiene portion, namely, a 1,2-vinyl bond content (mol%), was obtained in accordance with an equation of Hampton's method (a method described in R. R. Hampton, Analytical Chemistry 21, 923 (1949)). As a measuring apparatus, a Fourier transform infrared spectrophotometer "FT-IR230" manufactured by JASCO Corporation was used.

(Hydrogenation Rate and Ethylene Structure of Rubber-like Polymer)

An integrated value of an unsaturated bond portion of a polymer before hydrogenation was obtained by $^1$H-NMR measurement. Subsequently, a large amount of methanol was added to a reaction solution obtained after hydrogenation to precipitate and collect a hydrogenated conjugated diene-based polymer. Then, the hydrogenated conjugated diene-based polymer was extracted with acetone, and the hydrogenated conjugated diene-based polymer was vacuum dried. The resultant was used as a sample for the $^1$H-NMR measurement to measure a hydrogenation rate, an ethylene structure, and a conjugated diene monomer unit. Conditions for the $^1$H-NMR measurement were as follows.

(Measurement Conditions)

Measuring apparatus: JNM-LA400 (manufactured by JEOL Ltd.)
Solvent: deuterated chloroform
Measurement sample: substance sampled before or after hydrogenation of polymer
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

(Content of Styrene Block in Rubber-like Polymer)

Assuming that a chain of eight or more styrene structure units is defined as a styrene block, and the content was obtained as follows. Based on a $^1$H-NMR spectrum at 400 MHz measured with deuterated chloroform used as a solvent, a ratio of an integrated value of the following (X) in each chemical shift range was obtained, and thus, the content of the styrene block contained in the rubber-like block polymer was obtained.
(X) Chain of eight or more aromatic vinyl compounds:

$$6.00 \leq S < 6.68$$

(Iodine Value of Rubber-like Polymer)

The iodine value of each rubber-like polymer was calculated in accordance with a method described in "JIS K 0070: 1992".

(SP Value of Rubber-like Polymer)

The SP value (MPa$^{1/2}$) was calculated in accordance with the equation, ((molar cohesive energy)/(molar volume))$^{1/2}$. Here, when the rubber-like polymer contains two or more different monomers, the molar cohesive energy has additivity, and therefore, the molar cohesive energy of the polymer is calculated as an average (an average distributed in accordance with content rates) of molar coherent energies of the respective components in accordance with the content rates (mol%) of the monomers and the molar cohesive energy of a homopolymer of each monomer. The molar volume also has additivity in the same manner as the molar coherent energy, and the molar volume of the polymer is calculated as an average (an average distributed in accordance with content rates) of molar volumes of the respective components in accordance with the content rates (mol%) of the monomers and the molar volume of a homopolymer of each monomer. It is noted that the molar cohesive energy and the molar volume of the homopolymer constituted by each monomer are shown in Table 1.

[Table 1]

| Polymer | Molar Coherent Energy (J/mol) | Molar Volume ($\times 10^{-6} m^3$/mol) |
|---|---|---|
| Polystyrene Homopolymer | 36,932 | 97.0 |
| 1,2-Polybutadiene Homopolymer | 16,450 | 58.3 |
| 1,4- Polybutadiene Homopolymer | 18,579 | 59.1 |
| 1,2-Polybutylene Homopolymer | 17,527 | 65.6 |
| Polyethylene (1,4-hydrogenated Polybutadiene) Homopolymer | 18,146 | 64.4 |

(Glass Transition Temperature (Tg) of Rubber-like Polymer)

Each rubber-like polymer was used as a sample to record a DSC curve with a differential scanning calorimeter "DSC3200S" manufactured by Mac Science in accordance with ISO 22768: 2006 under a flow of helium at 50 mL/min with a temperature increased from -100°C at a rate of 20°C/min, and a peak top (infection point) of the thus obtained DSC differential curve was defined as the glass transition temperature.

(Production Example 1) Rubber-like Polymer (A) before Hydrogenation

A temperature-controllable autoclave having an internal capacity of 40 L and equipped with a stirrer and a jacket was used as a reactor. The reactor was charged with 2,160 g of 1,3-butadiene, from which impurities had been precedently removed, 300 g of styrene, 21,000 g of cyclohexane, and 30 mmol of tetrahydrofuran (THF) and 4.9 mmol of 2,2-bis(2-oxolanyl)propane used as polar substances, and the internal temperature of the reactor was kept at 42°C. As a polymerization initiator, 33.2 mmol of n-butyllithium was supplied to the reactor.
After starting a polymerization reaction, the temperature within the reactor started to increase due to heat generation through polymerization, and after monomer conversion within the reactor reached 98%, 540 g of 1,3-butadiene was added to cause a reaction.
The temperature within the reactor finally reached 76°C. Two minutes after reaching this reaction temperature peak, 6.6 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 6.0 mmol of methanol used as a reaction terminator was added to obtain a rubber-like polymer solution (A-1). A portion of the conjugated diene-based polymer solution was extracted to be desolvated with a dryer, and thus, a rubber-like polymer (A) before hydrogenation was obtained. Analysis results are shown in Table 2.

(Production Example 2) Rubber-like Polymer (B) before Hydrogenation

A temperature-controllable autoclave having an internal capacity of 40 L and equipped with a stirrer and a jacket was used as a reactor. The reactor was charged with 2,100 g of 1,3-butadiene, from which impurities had been precedently removed, 780 g of styrene, 21,000 g of cyclohexane, and 30 mmol of tetrahydrofuran (THF) and 18.3 mmol of 2,2-bis(2-oxolanyl)propane used as polar substances, and the internal temperature of the reactor was kept at 42°C. As a polymerization initiator, 26.2 mmol of n-butyllithium was supplied to the reactor.
After starting a polymerization reaction, the temperature within the reactor started to increase due to heat generation through polymerization, and after monomer conversion within the reactor reached 98%, 120 g of 1,3-butadiene was added to cause a reaction.
The temperature within the reactor finally reached 78°C. Two minutes after reaching this reaction temperature peak, 5.2 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 4.7 mmol of methanol used as a reaction terminator was added to obtain a rubber-like polymer solution (B-1). A portion of the conjugated diene-based polymer solution was extracted to be desolvated with a dryer, and thus, a rubber-like polymer (B) before hydrogenation was obtained. Analysis results are shown in Table 2.

(Production Example 3) Rubber-like Polymer (C) before Hydrogenation

A rubber-like polymer solution (C-1) was obtained in the same manner as in Production Example 1 except that the amount of 2,2-dimethoxy-1-(3-trimethoxysilylpropyl)-1-aza-2-silacyclopentane (compound 1) added was changed to 3.9 mmol. A portion of the conjugated diene-based polymer solution was extracted to be desolvated with a dryer, and thus, a rubber-like polymer (C) before hydrogenation was obtained. Analysis results are shown in Table 2.

(Production Example 4) Rubber-like Polymer (D) before Hydrogenation

A rubber-like polymer solution (D-1) was obtained in the same manner as in Production Example 1 except that 2,2-dimethoxy-1-(3-trimethoxysilylpropyl)-1-aza-2-silacyclopentane (compound 1) was changed to 1,3-dimethyl-2-imidazolidinone (compound 2), and that the amount thereof added was changed to 16.6 mmol. A portion of the conjugated diene-based polymer solution was extracted to be desolvated with a dryer, and thus, a rubber-like polymer (D) before hydrogenation was obtained. Analysis results are shown in Table 2.

(Production Example 5) Rubber-like Polymer (E) before Hydrogenation

A rubber-like polymer solution (E-1) was obtained in the same manner as in Production Example 1 except that 2,2-dimethoxy-1-(3-trimethoxysilylpropyl)-1-aza-2-silacyclopentane (compound 1) was changed to tetraethoxysilane (compound 3), and that the amount thereof added was changed to 6.6 mmol. A portion of the conjugated diene-based polymer solution was extracted to be desolvated with a dryer, and thus, a rubber-like polymer (E) before hydrogenation was obtained. Analysis results are shown in Table 2.

(Preparation of Hydrogenation Catalyst (TC1))

A nitrogen-purged reactor was charged with 1 L of dried and purified cyclohexane, and 100 mmol of bis($\eta$5-cyclopentadienyl)titanium dichloride was added thereto. Under sufficient stirring, a n-hexane solution containing 200 mmol of trimethyl aluminum was added thereto to be reacted for about 3 days at room temperature, and thus, a hydrogenation catalyst (TC1) was obtained.

(Production Example 6) Rubber-like Polymer (AH1)

To the rubber-like polymer solution (A-1) before hydrogenation obtained in Production Example 1, the hydrogenation catalyst (TC1) was added in an amount, in terms of Ti, of 35 ppm per 100 parts by mass of the rubber-like polymer before hydrogenation, followed by a hydrogenation reaction at a hydrogen pressure of 0.8 MPa and an average temperature of 85°C for 50 minutes. To the thus obtained solution of the rubber-like polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the resultant was added in a dropwise manner to rubber composition solution hot water to remove the solvent, and the resultant was subjected to a drying treatment with a dryer to obtain a rubber-like polymer (AH1).

(Production Example 7) Rubber-like Polymer (AH2)

A rubber-like polymer (AH2) was obtained in the same manner as in Production Example 6 except that the amount of the hydrogenation catalyst (TC1) added was changed to 45 ppm, in terms of Ti, per 100 parts by mass of the rubber-like polymer before hydrogenation.

(Production Example 8) Rubber-like Polymer (AH3)

A rubber-like polymer (AH3) was obtained in the same manner as in Production Example 6 except that the amount of the hydrogenation catalyst (TC1) added was changed to 60 ppm, in terms of Ti, per 100 parts by mass of the rubber-like polymer before hydrogenation.

(Production Example 9) Rubber-like Polymer (AH4)

A rubber-like polymer (AH4) was obtained in the same manner as in Production Example 6 except that the amount of the hydrogenation catalyst (TC1) added was changed to 70 ppm, in terms of Ti, per 100 parts by mass of the rubber-like polymer before hydrogenation.

(Production Example 10) Rubber-like Polymer (AH5)

A rubber-like polymer (AH5) was obtained in the same manner as in Production Example 6 except that the amount of the hydrogenation catalyst (TC1) added was changed to 80 ppm, in terms of Ti, per 100 parts by mass of the rubber-like polymer before hydrogenation.

(Production Example 11) Rubber-like Polymer (BH1)

To the rubber-like polymer solution (B-1) before hydrogenation obtained in Production Example 2, the hydrogenation catalyst (TC1) was added in an amount, in terms of Ti, of 90 ppm per 100 parts by mass of the rubber-like polymer before hydrogenation, followed by a hydrogenation reaction at a hydrogen pressure of 0.8 MPa and an average temperature of 85°C for 50 minutes. To the thus obtained solution of the rubber-like polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the resultant was added in a dropwise manner to rubber composition solution hot water to remove the solvent, and the resultant was subjected to a drying treatment with a dryer to obtain a rubber-like polymer (BH1).

(Production Example 12) Rubber-like Polymer (BH2)

A rubber-like polymer (BH2) was obtained in the same manner as in Production Example 11 except that the amount of the hydrogenation catalyst (TC1) added was changed to 70 ppm, in terms of Ti, per 100 parts by mass of the rubber-like polymer before hydrogenation.

(Production Example 13) Rubber-like Polymer (CH1)

To the rubber-like polymer solution (C-1) before hydrogenation obtained in Production Example 3, the hydrogenation catalyst (TC1) was added in an amount, in terms of Ti, of 60 ppm per 100 parts by mass of the rubber-like polymer before hydrogenation, followed by a hydrogenation reaction at a hydrogen pressure of 0.8 MPa and an average temperature of 85°C for 50 minutes. To the thus obtained solution of the rubber-like polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the resultant was added in a dropwise manner to rubber composition solution hot water to remove the solvent, and the resultant was subjected to a drying treatment with a dryer to obtain a rubber-like polymer (CH1).

(Production Example 14) Rubber-like Polymer (DH1)

To the rubber-like polymer solution (D-1) before hydrogenation obtained in Production Example 4, the hydrogenation catalyst (TC1) was added in an amount, in terms of Ti, of 60 ppm per 100 parts by mass of the rubber-like polymer before hydrogenation, followed by a hydrogenation reaction at a hydrogen pressure of 0.8 MPa and an average temperature of 85°C for 50 minutes. To the thus obtained solution of the rubber-like polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the resultant was added in a dropwise manner to rubber composition solution hot water to remove the solvent, and the resultant was subjected to a drying treatment with a dryer to obtain a rubber-like polymer (DH1).

(Production Example 15) Rubber-like Polymer (EH1)

To the rubber-like polymer solution (E-1) before hydrogenation obtained in Production Example 5, the hydrogenation catalyst (TC1) was added in an amount, in terms of Ti, of 60 ppm per 100 parts by mass of the rubber-like polymer before hydrogenation, followed by a hydrogenation reaction at a hydrogen pressure of 0.8 MPa and an average temperature of 85°C for 50 minutes. To the thus obtained solution of the rubber-like polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the resultant was added in a dropwise manner to rubber composition solution hot water to remove the solvent, and the resultant was subjected to a drying treatment with a dryer to obtain a rubber-like polymer (EH1).

[Table 2]

| | A | AH1 | AH2 | AH3 | AH4 | AH5 | B | BH1 | BH2 | C | CH1 | D | DH1 | E | EH1 |
|---|---|---|---|---|---|---|---|---|---|---|---|---|---|---|---|
| Weight Average Molecular Weight ($\times 10^4$) | 35 | 35 | 35 | 35 | 35 | 35 | 31 | 31 | 31 | 28 | 28 | 22 | 22 | 27 | 27 |
| Mooney Viscosity [ML(1+4)]@100°C | 45 | 42 | 55 | 67 | 73 | 86 | 47 | 45 | 55 | 40 | 58 | 40 | 50 | 40 | 57 |
| Hydrogenation Rate [mol%inBd] | 0 | 46.5 | 55 | 75 | 90 | 100 | 0 | 63 | 94.5 | 0 | 75 | 0 | 75 | 0 | 75 |
| Iodine Value [I g/100 g] | 423.5 | 226.6 | 190.6 | 105.9 | 42.3 | 0.0 | 348.7 | 129.0 | 19.2 | 423.5 | 105.2 | 423.5 | 105.4 | 423.5 | 105.9 |
| Amount of Bound Styrene [wt%] | 9.9 | 9.9 | 9.9 | 9.9 | 9.9 | 9.9 | 25.8 | 25.8 | 25.8 | 10.5 | 10.5 | 10.3 | 10.3 | 9.9 | 9.9 |
| 1,2-Vinyl Bond Content [mol%inBd] | 40.3 | 40.3 | 40.3 | 40.3 | 40.3 | 40.3 | 58.0 | 58.0 | 58.0 | 40.5 | 40.5 | 41.2 | 41.2 | 40.3 | 40.3 |
| SP Value [MPa1/2] | 17.6 | 17.4 | 17.3 | 17.1 | 16.9 | 16.9 | 17.7 | 17.5 | 17.2 | 17.6 | 17.1 | 17.6 | 17.1 | 17.6 | 17.1 |
| Tg [°C] | -61.1 | -69.9 | -67.9 | -63.1 | -59.6 | -57.2 | -30.0 | -42.2 | -35.5 | -61.1 | -62.5 | -61.1 | -62.4 | -61.2 | -63.1 |
| Ethylene Structure [wt%] | 0.0 | 5.9 | 13.9 | 32.8 | 47.0 | 56.5 | 0.0 | 42 | 30.9 | 0.0 | 32.5 | 0.0 | 31.9 | 0.0 | 32.8 |
| Content of Styrene Block [wt%] | 1.7 | 1.7 | 1.7 | 1.7 | 1.7 | 1.7 | 2.0 | 2.0 | 2.0 | 1.8 | 1.8 | 1.8 | 1.8 | 1.8 | 1.8 |
| Conjugated Diene Monomer Unit [wt%] | 85.2 | 45.6 | 38.4 | 21.3 | 8.5 | 0.0 | 62.9 | 23.3 | 3.5 | 85.2 | 21.1 | 85.2 | 21.2 | 85.2 | 21.3 |
| Modifier | Compound 1 | Compound 1 | Compound 1 | Compound 1 | Compound 1 | Compound 1 | Compound 1 | Compound 1 | Compound 1 | Compound 1 | Compound 1 | Compound 2 | Compound 2 | Compound 3 | Compound 3 |
| Modification Ratio [wt%] | 80 | 80 | 80 | 80 | 80 | 80 | 80 | 80 | 80 | 60 | 60 | 68 | 68 | 0 | 0 |

18

(Examples 1 to 12 and Comparative Examples 1 to 7)

The rubber-like polymers shown in Table 2, high cis polybutadiene (BR, "UBEPOL U150" manufactured by Ube Industries, Ltd.) or natural rubber (NR) were used as raw material rubber components to obtain rubber compositions containing respective raw material rubbers in accordance with compositions shown in Tables 3 and 4 and described below.
[Table 3]

| Compound Composition | | | Comparative Example 1 | Comparative Example 2 | Example 1 | Example 2 | Example 3 | Comparative Example 3 | Comparative Example 4 | Example 4 | Example 5 | Example 6 |
|---|---|---|---|---|---|---|---|---|---|---|---|---|
| | Rubber-like Polymer | Type | A | AH1 | AH2 | AH3 | AH4 | AH5 | B | BH1 | BH2 | AH3 |
| | | [phr] | 30 | 30 | 30 | 30 | 30 | 30 | 30 | 30 | 30 | 50 |
| | Silica | [phr] | 80 | 80 | 80 | 80 | 80 | 80 | 80 | 80 | 80 | 80 |
| | Carbon Black | [phr] | 5 | 5 | 5 | 5 | 5 | 5 | 5 | 5 | 5 | 5 |
| | S-RAE Oil | [phr] | 35 | 35 | 35 | 35 | 35 | 35 | 35 | 35 | 35 | 35 |
| | Resin | [phr] | 0 | 0 | 0 | 0 | 0 | 0 | 0 | 0 | 0 | 0 |
| | BR | [phr] | 0 | 0 | 0 | 0 | 0 | 0 | 0 | 0 | 0 | 0 |
| | NR | [phr] | 70 | 70 | 70 | 70 | 70 | 70 | 70 | 70 | 70 | 50 |
| | Silane Coupling Agent | [phr] | 6 | 6 | 6 | 6 | 6 | 6 | 6 | 6 | 6 | 6 |
| | Zinc Powder | [phr] | 2.5 | 2.5 | 2.5 | 2.5 | 2.5 | 2.5 | 2.5 | 2.5 | 2.5 | 2.5 |
| | Stearic Acid | [phr] | 1 | 1 | 1 | 1 | 1 | 1 | 1 | 1 | 1 | 1 |
| | Anti-aging Agent | [phr] | 2 | 2 | 2 | 2 | 2 | 2 | 2 | 2 | 2 | 2 |
| | Sulfur | [phr] | 2.2 | 2.2 | 2.2 | 2.2 | 2.2 | 2.2 | 2.2 | 2.2 | 2.2 | 2.2 |
| | Vulcanization Accelerator 1 | [phr] | 1.7 | 1.7 | 1.7 | 1.7 | 1.7 | 1.7 | 1.7 | 1.7 | 1.7 | 1.7 |
| | Vulcanization Accelerator 2 | [phr] | 2 | 2 | 2 | 2 | 2 | 2 | 2 | 2 | 2 | 2 |
| Physical Properties | Processability (Evaluation 1) | | 100 | 100 | 100 | 100 | 105 | 110 | 90 | 90 | 90 | 105 |
| | On-snow Performance (Evaluation 2) | | 100 | 110 | 105 | 105 | 105 | 110 | 116 | 116 | 116 | 119 |
| | Abrasion Resistance (Evaluation 3) | | 100 | 88 | 81 | 79 | 77 | 81 | 99 | 97 | 92 | 92 |
| | Crack Resistance (Evaluation 4) | | 100 | 110 | 116 | 121 | 127 | 107 | 99 | 99 | 110 | 107 |
| | Low Fuel Consumption Performance (Evaluation 2) | | 100 | 100 | 95 | 90 | 88 | 95 | 105 | 105 | 100 | 102 |

[Table 4]

| | | Comparative Example 5 | Example 7 | Comparative Example 6 | Comparative Example 7 | Example 8 | Example 9 | Example 10 | Example 11 | Example 12 |
|---|---|---|---|---|---|---|---|---|---|---|
| Compound Composition | Rubber-like Polymer Type | AH3 | AH3 | AH3 | - | AH3 | AH3 | CH1 | DH1 | EH1 |
| | Rubber-like Polymer [phr] | 100 | 10 | 5 | 0 | 30 | 30 | 30 | 30 | 30 |
| | Silica [phr] | 80 | 80 | 80 | 80 | 80 | 80 | 80 | 80 | 80 |
| | Carbon Black [phr] | 5 | 5 | 5 | 5 | 5 | 5 | 5 | 5 | 5 |
| | S-RAE Oil [phr] | 35 | 35 | 35 | 35 | 20 | 10 | 35 | 35 | 35 |
| | Resin [phr] | 0 | 0 | 0 | 0 | 15 | 25 | 0 | 0 | 0 |
| | BR [phr] | 0 | 0 | 0 | 30 | 0 | 0 | 0 | 0 | 0 |
| | NR [phr] | 0 | 90 | 95 | 70 | 70 | 70 | 70 | 70 | 70 |
| | Silane Coupling Agent [phr] | 6 | 6 | 6 | 6 | 6 | 6 | 6 | 6 | 6 |
| | Zinc Powder [phr] | 2.5 | 2.5 | 2.5 | 2.5 | 2.5 | 2.5 | 2.5 | 2.5 | 2.5 |
| | Stearic Acid [phr] | 1 | 1 | 1 | 1 | 1 | 1 | 1 | 1 | 1 |
| | Anti-aging Agent [phr] | 2 | 2 | 2 | 2 | 2 | 2 | 2 | 2 | 2 |
| | Sulfur [phr] | 2.2 | 2.2 | 2.2 | 2.2 | 2.2 | 2.2 | 2.2 | 2.2 | 2.2 |
| | Vulcanization Accelerator 1 [phr] | 1.7 | 1.7 | 1.7 | 1.7 | 1.7 | 1.7 | 1.7 | 1.7 | 1.7 |
| | Vulcanization Accelerator 2 [phr] | 2 | 2 | 2 | 2 | 2 | 2 | 2 | 2 | 2 |
| Physical Properties | Processability (Evaluation 1) | 105 | 100 | 100 | 110 | 105 | 107 | 95 | 95 | 95 |
| | On-snow Performance (Evaluation 2) | 121 | 112 | 101 | 105 | 112 | 116 | 110 | 110 | 110 |
| | Abrasion Resistance (Evaluation 3) | 92 | 88 | 92 | 88 | 86 | 81 | 90 | 90 | 90 |
| | Crack Resistance (Evaluation 4) | 105 | 116 | 114 | 99 | 116 | 121 | 110 | 110 | 110 |
| | Low Fuel Consumption Performance (Evaluation 2) | 100 | 100 | 105 | 105 | 108 | 112 | 103 | 105 | 110 |

Names of products used as the respective components shown in Tables 3 and 4 were as follows:

- Silica (trade name "Ultrasil 7000GR" manufactured by Evonik Degussa, nitrogen adsorption specific surface area: 170 $m^2/g$)
- Carbon black (trade name "Seast KH (N339)" manufactured by Tokai Carbon Co., Ltd.)
- S-RAE Oil (trade name "Process NC140" manufactured by JX Nippon Oil & Energy Corporation)
- Resin (product name "Oppera 383" manufactured by Exxon)
- Silane coupling agent (trade name "Si75" manufactured by Evonik Degussa, bis(triethoxysilylpropyl)disulfide)
- Anti-aging agent: N-(1,3-dimethylbutyl)-N'-phenyl-p-phenylenediamine
- Vulcanization accelerator 1: N-cyclohexyl-2-benzothiazylsulfinamide
- Vulcanization accelerator 2: diphenylguanidine

The above-described materials were kneaded by the following method to obtain each rubber composition. A closed kneader (having an internal capacity of 0.3 L) equipped with a temperature controller was used to knead, as first stage kneading, the raw material rubbers (the rubber-like polymer, the natural rubber, and the high cis polybutadiene), the filler (silica and carbon black), the silane coupling agent, the process oil, zinc powder and stearic acid under conditions of a filling rate of 65% and a rotor speed of 30 to 50 rpm. Here, the temperature of the closed mixer was controlled to obtain each rubber composition (compound) at a discharge temperature of 155 to 160°C.

Next, as second stage kneading, after the compound obtained as described above was cooled to room temperature, the anti-aging agent was added thereto, and the resultant was kneaded again for improving dispersibility of the silica-based inorganic filler. Also in this case, the discharge temperature of the compound was adjusted to 155 to 160°C by the temperature control of the mixer. After cooling, as third stage kneading, the resultant was kneaded with sulfur and the vulcanization accelerators 1 and 2 added thereto with an open roll set to 70°C. Thereafter, the resultant was molded, and vulcanized with a vulcanization press at 160°C for 25 minutes. Each rubber composition before vulcanization and the rubber composition after the vulcanization were evaluated for their properties. Specifically, the evaluation was performed by the following methods. Results are shown in Tables 2 and 3.

[Evaluation of Properties]

(Evaluation 1) Processability: Mooney Viscosity of Compound

Each compound obtained after the second stage kneading and before the third stage kneading performed as described above was used as a sample, and the viscosity was measured with a Mooney viscometer in accordance with JIS K6300-1 after preheating at 130°C for 1 minute and after rotating the rotor at 2 rpm for 4 minutes. The obtained result was expressed as an index by assuming that the result of Comparative Example 1 was 100. A smaller index indicates better processability.

(Evaluation 2) On-snow Performance and Low Fuel Consumption Performance: Viscosity Parameter

A viscosity tester "ARES" manufactured by Rheometric Scientific was used to measure a viscosity parameter in a twist mode. Each measured value was expressed as an index by assuming that a result obtained from the rubber composition of Comparative Example 1 was 100.

A tan δ measured at 50°C, a frequency of 10 Hz, and a strain of 3% was used as an index of fuel economy. A smaller index indicates better fuel economy.

A storage modulus (G') measured at -20°C, a frequency of 10 Hz, and a strain of 1% was used as an index of on-snow performance. A smaller index indicates better on-snow performance.

(Evaluation 3) Abrasion Resistance

An Akron abrasion tester (manufactured by Yasuda Seiki Seisakusho, Ltd.) was used to measure an amount of abrasion caused at a load of 44.4 N through 1,000 rotations in accordance with JIS K6264-2, and the obtained result was expressed as an index by assuming that the result of Comparative Example 1 was 100. A smaller index indicates better abrasion resistance.

(Evaluation 4) Crack Resistance

A trouser test piece was prepared as a test piece to perform a tear test in accordance with JIS K-6252, and thus, a maximum tear force obtained before breaking the test piece was measured. The obtained result was expressed as an index by assuming that the result of Comparative Example 1 was 100. A larger index indicates better crack resistance.

As shown in Tables 3 and 4, it was confirmed that Examples 1 to 12 are excellent in balance between on-snow performance and abrasion resistance of the rubber composition and have excellent crack resistance as compared with Comparative Examples 1 to 7.

The rubber composition of the present invention is industrially applicable in the fields of tire treads, interiors and exteriors of vehicles, anti-vibration rubbers, belts, shoes, foam materials, and various industrial products.

## Claims

1. A rubber composition, comprising:

   10 parts by mass or more and 90 parts by mass or less of a rubber-like polymer having an iodine value as measured in accordance with JIS K0070:1992 of 10 to 200, a content of an ethylene structure of 3% by mass or more, a content of an aromatic vinyl monomer block of less than 10% by mass, and a content of a conjugated diene monomer unit of 2% by mass or more;
   10 parts by mass or more and 90 parts by mass or less of a natural rubber, wherein a total amount of a rubber component including the rubber-like polymer and the natural rubber is 100 parts by mass; and
   60 parts by mass or more and 120 parts by mass or less of a silica-based inorganic filler.

2. The rubber composition according to claim 1, wherein the rubber-like polymer has a solubility parameter (SP value) of 16.8 $(MPa)^{1/2}$ or more and 17.4 $(MPa)^{1/2}$ or less.

3. The rubber composition according to claim 1 or 2, wherein the rubber-like polymer has a glass transition temperature (Tg) of -35°C or less, wherein the glass transition temperature is defined as a peak top of a differential scanning calorimetry differential curve obtained by recording a differential scanning calorimetry curve during temperature increase in a prescribed temperature range in accordance with ISO 22768:2006.

4. The rubber composition according to any one of claims 1 to 3,
   wherein the rubber-like polymer is a conjugated diene-based polymer, containing 5% by mass or more and 40% by mass or less of an aromatic vinyl monomer unit, and a 1,2-vinyl bond content in the conjugated diene monomer unit is 10 mol% or more and 60 mol% or less.

5. The rubber composition according to any one of claims 1 to 4,
   wherein the rubber-like polymer contains a nitrogen atom.

6. The rubber composition according to claim 5,
   wherein the rubber-like polymer has a modification ratio of 40% by mass or more.

7. The rubber composition according to any one of claims 1 to 6, comprising a resin.

8. A tire, comprising the rubber composition according to any one of claims 1 to 7.

## Patentansprüche

1. Kautschukzusammensetzung, umfassend:

   10 Massenteile oder mehr und 90 Massenteile oder weniger eines kautschukartigen Polymers mit einer gemäß JIS K0070:1992 gemessenen Jodzahl von 10 bis 200, einem Gehalt einer Ethylenstruktur von 3 Massen-% oder mehr, einem Gehalt an aromatischem Vinylmonomerblock von weniger als 10 Massen-% und einem Gehalt einer konjugierten Dienmonomereinheit von 2 Massen-% oder mehr;
   10 Massenteile oder mehr und 90 Massenteile oder weniger eines Naturkautschuks, wobei die Gesamtmenge einer Kautschukkomponente, die das kautschukartige Polymer und den Naturkautschuk beinhaltet, 100 Massenteile beträgt; und
   60 Massenteile oder mehr und 120 Massenteile oder weniger eines anorganischen Füllstoffs auf Siliciumdioxidbasis.

2. Kautschukzusammensetzung nach Anspruch 1,

wobei das kautschukartige Polymer einen Löslichkeitsparameter (SP-Wert) von 16,8 (MPa)$^{1/2}$ oder mehr und 17,4 (MPa)$^{1/2}$ oder weniger aufweist.

3. Kautschukzusammensetzung nach Anspruch 1 oder 2,
   wobei das kautschukartige Polymer eine Glasübergangstemperatur (Tg) von -35°C oder weniger aufweist, wobei die Glasübergangstemperatur als Peakspitze einer Differenzscanningkalorimetrie-Differenzkurve definiert ist, die durch Aufzeichnung einer Differenzscanningkalorimetrie-Kurve bei einer Temperaturerhöhung in einem vorgegebenen Temperaturbereich gemäß ISO 22768:2006 erhalten wird.

4. Kautschukzusammensetzung nach einem der Ansprüche 1 bis 3,
   wobei das kautschukartige Polymer ein Polymer auf Basis eines konjugierten Diens ist, welches 5 Massen-% oder mehr und 40 Massen-% oder weniger einer aromatischen Vinylmonomereinheit enthält, und der 1,2-Vinylbindungsgehalt in der konjugierten Dienmonomereinheit 10 Mol-% oder mehr und 60 Mol-% oder weniger ist.

5. Kautschukzusammensetzung nach einem der Ansprüche 1 bis 4,
   wobei das kautschukartige Polymer ein Stickstoffatom enthält.

6. Kautschukzusammensetzung nach Anspruch 5,
   wobei das kautschukartige Polymer einen Modifikationsgrad von 40 Massen-% oder mehr aufweist.

7. Kautschukzusammensetzung nach einem der Ansprüche 1 bis 6, welche ein Harz umfasst.

8. Reifen, der die Kautschukzusammensetzung nach einem der Ansprüche 1 bis 7 enthält.

**Revendications**

1. Composition de caoutchouc, comprenant :

   10 parties en masse ou plus et 90 parties en masse ou moins d'un polymère de type caoutchouc ayant un indice d'iode tel que mesuré selon JIS K0070:1992 de 10 à 200, une teneur en une structure d'éthylène de 3 % en masse ou plus, une teneur en une séquence de monomère vinylique aromatique de moins de 10 % en masse, et une teneur en un motif monomère de diène conjugué de 2 % en masse ou plus ;
   10 parties en masse ou plus et 90 parties en masse ou moins d'un caoutchouc naturel, dans laquelle une quantité totale d'un composant de caoutchouc incluant le polymère de type caoutchouc et le caoutchouc naturel est de 100 parties en masse ; et
   60 parties en masse ou plus et 120 parties en masse ou moins d'une charge inorganique à base de silice.

2. Composition de caoutchouc selon la revendication 1, dans laquelle le polymère de type caoutchouc a un paramètre de solubilité (valeur SP) de 16,8 (MPa)$^{1/2}$ ou plus et de 17,4 (MPa)$^{1/2}$ ou moins.

3. Composition de caoutchouc selon la revendication 1 ou 2, dans laquelle le polymère de type caoutchouc a une température de transition vitreuse (Tg) de -35 °C ou moins, dans laquelle la température de transition vitreuse est définie comme étant une crête d'une courbe différentielle de calorimétrie à balayage différentiel obtenue par enregistrement d'une courbe de calorimétrie à balayage différentiel pendant une augmentation de température dans une plage de température prescrite selon l'ISO 22768:2006.

4. Composition de caoutchouc selon l'une quelconque des revendications 1 à 3,
   dans laquelle le polymère de type caoutchouc est un polymère à base de diène conjugué, contenant 5 % en masse ou plus et 40 % en masse ou moins d'un motif monomère vinylique aromatique, et une teneur en liaisons 1,2-vinyliques dans le motif monomère de diène conjugué est de 10 % en moles ou plus et de 60 % en moles ou moins.

5. Composition de caoutchouc selon l'une quelconque des revendications 1 à 4,
   dans laquelle le polymère de type caoutchouc contient un atome d'azote.

6. Composition de caoutchouc selon la revendication 5,
   dans laquelle le polymère de type caoutchouc a un rapport de modification de 40 % en masse ou plus.

7. Composition de caoutchouc selon l'une quelconque des revendications 1 à 6, comprenant une résine.

8. Pneumatique, comprenant la composition de caoutchouc selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2003085010 A
- WO 2019151126 A
- WO 2019151127 A
- WO 2019078083 A
- WO 9605250 A
- JP 2000053706 A
- WO 2002002663 A
- WO 2015006179 A
- WO 2019171679 A
- WO 2019142501 A
- WO 2014133097 A

### Non-patent literature cited in the description

- **I. M. KOLTHOFF et al.** *J. Polym. Sci.,* 1946, vol. 1, 429
- **J. BICERANO.** Prediction of Polymer Properties. Marcel Dekker, 2002
- *Kautschunk Gummi Kunststoffe,* 1999, vol. 52 (12), 799
- **R. R. HAMPTON.** *Analytical Chemistry,* 1949, vol. 21, 923